# EUROPEAN PATENT SPECIFICATION

(11) **EP 3 464 139 B1**
(45) Date of publication and mention of the grant of the patent: **08.07.2020**
(21) Application number: 17728110.2
(22) Date of filing: 29.05.2017
(51) Int. Cl.: B65H 3/32

(54) **PILE SHEET REMOVER**
FOLIENSTAPELENTFERNER
EXTRACTEUR DE FEUILLES D'UNE PILE

(30) Priority: 30.05.2016 DK 201670379
(43) Date of publication of application: 10.04.2019
(73) Proprietor: Schur Technology A/S, 8700 Horsens (DK)
(72) Inventor: ANDERSSON, Jonas, 575 36 Eksjö (SE); GRANDIN, Niklas, 571 72 Ormaryd (SE); GUSTAVSSON, Stefan, 578 33 Aneby (SE)
(74) Representative: Nielsen, Leif
(86) International application number: PCT/EP2017/062935
(87) International publication number: WO 2017/207510

(56) References cited:
- EP-A2- 0 353 527
- EP-A2- 1 484 270
- WO-A1-2009/016447
- US-A- 5 102 293

## Description

### Field of the Invention

The present invention relates to a pile sheet remover system (PSR) for preparing a pile of sheets with a height, a free end, and a side of sheet edges for processing in a pile preparation unit (PPU). The PSR comprises a sheet removing unit having a support frame supporting a moving frame, configured for a linear movement in an attack direction towards the side and the free end of the pile of sheets. The moving frame comprises a side support plate with a side support face arranged to face and apply to the side of the pile of sheets. The PSR comprises a grab plate arranged with a grab face essentially perpendicular to the side support face and extending beyond the side support face in the attack direction, configured with a grab actuator for a grab movement towards the free end of the pile of sheets. The PSR comprises one or more attack knives arranged below the grab plate to face the side of the pile of sheets, and configured with one or more attack actuators for a first attack movement in the attack direction for insertion of the one or more attack knives between a pair of sheets, i.e. between two adjacent sheets.

The invention also relates to a method of preparing a pile of sheets for processing in the PSR.

### Background of the Invention

Preparation of a pile of sheets for processing, such as a pile of sheets for printing, may require removal of a number of sheets from the pile. There may be damaged sheets that need to be removed before processing. The damaged sheets may be at a top or free end of a pile. The damaged sheets may be at the bottom side of a pile. The damaged sheets may be the bottom sheets of a pile standing on a pallet.

Removal of sheets has often been performed manually.

Attempts to remove a number of sheets may result in altering an otherwise prepared for processing pile of sheets. The alteration may shift or disturb the pile of sheets otherwise perfectly or sufficiently aligned.

EP 1,484,270 A2 discloses a pile sheet remover system of the type mentioned by way of introduction. US 5,102,293 A also discloses a pile sheet remover system of the type mentioned by way of introduction and which describes the method of preparing a pile of sheets for processing.

These systems disclose the use of an attack knife with an attack actuator for a first attack movement in the attack direction for insertion of the attack knife between a pair of sheets. The attack knife cooperates with a gripper jaw for gripping seizing and retaining a partial stack. The seized partial stack is lifted and tabletop inserted between said pair of sheets. This requires that the attack knife is large to be able to support the seized partial stack. However this makes it difficult to have a secure insertion between a pair of sheets without the risk of damaging the sheets.

In these documents there are no disclosures of marking units for marking a sheet on an uncovered free end of the pile of sheets. Therefore there is no secure knowledge of which sheet is the last sheet in a pile.

### Object of the Invention

It is an object of the present invention to overcome one or more of the before mentioned limitations.

### Description of the Invention

An object is achieved by a pile sheet remover system (PSR) for preparing a pile of sheets with a height, a free end, and a side of sheet edges for processing in a pile preparation unit (PPU).

The PSR comprises a sheet removing unit having a support frame supporting a moving frame, configured for a linear movement in an attack direction towards the side and the free end of the pile of sheets.

The moving frame comprises a side support plate with a side support face arranged to face and apply to the side of the pile of sheets.

The PSR comprises a grab plate arranged with a grab face essentially perpendicular to the side support face and extending beyond the side support face in the attack direction, configured with a grab actuator for a grab movement towards the free end of the pile of sheets.

The PSR comprisesone or more attack knives arranged below the grab plate to face the side of the pile of sheets, and configured with one or more attack actuators for a first attack movement in the attack direction for insertion of the one or more attack knives between a pair of sheets, i.e. between two adjacent sheets.

The PSR comprises a first attack knife for a first attack movement and a second attack knife for a second attack movement. The first attack knife is a smaller knife with a blade in the attack direction. The first knife may be a razor blade type of knife. The second attack knife is larger than the first knife and with a sharp and point type of form in the attack direction.

The knife may also be a stylus type of shape.

It is thereby achieved that top sheets can be removed automatically. Furthermore the arrangement can be adjusted according to different characteristics of a pile of sheets.

The use of the smaller and the larger knife ensures that the first knife divide the pair of sheets without damaging them in the first attack movement. The second and larger attack knife for the second attack movement ensures that there is sufficient strength to support the number of sheets above the attack knives.

The PSR further comprises a marking unit arranged to mark the sheet on an uncovered free end of the pile of sheets.

Thus providing means for marking the uncovered sheet.

A further advantage is that the system can be arranged in a pile preparation unit, which in other aspects such are turning the pile, airing the pile or changing of a pallet or the location of the pallet.

In an aspect one or more second attack knives are configured with one or more transverse actuators for a movement transverse to the line of attack direction and parallel to the sheet edges.

The knives used for the transverse movement may be second attack knives. There may be one knife for a transverse movement from a center area to a periphery. There may be another knife for a transverse movement from the center area to a periphery on the other side. There may be two second attack knives, each being configured with individual transverse actuators.

This effectively separates sheets to be removed from the remaining sheets. A further advantage is that the transverse movement leaves the knives in a favorable position when the actual removal takes place and thus decreases the risk of destroying the sheets.

In an aspect one or more first attack knives are configured with one or more edge lift actuators for a lift movement transverse to the line-of-attack direction and perpendicular to the sheet edges.

The lift movement lifts the edge of the sheets upwardly and thus makes it possible for a further insertion into the sheets.

Advantageously the movement is performed swiftly to increase the separation of sheets.

The lift actuators may be pneumatic actuators. The actuators may be adjustable in action length or speed.

In an aspect one or more attack knives are configured for a second attack movement extending the first attack movement in the attack direction for further insertion of the one or more attack knives between the pair of sheets.

This second movement may be provided by the same actuator used for the first movement. The second movement may also be provided by additional actuators. Thus there may be a first set of actuators and a second set of actuators.

The first type of actuators may be fast bi-state actuators for a short sharp attack.

The second type of actuators may be slower and continuous type of actuators that can move more slowly and controlled. The second type of actuators may also be controlled to reverse if a faulty insertion or resistance is detected.

In an aspect one or more attack knives are configured with an upwardly one-sided Chisel-type of edge and optionally a substantially linear edge extending opposite to the attack direction.

Such knife-forms provide a stylus or tip edge shape and an edge shape favorably in a transverse movement.

In an aspect the PSR may be arranged in a pallet change module comprising a pallet portal with movable pallet engagement means for engaging with a pallet for extraction and/or insertion of a pallet.

Such arrangement results in an integrated and fully automated preparation of the pile of sheets to be processed.

In an aspect the PSR is arranged cooperatively with a PPU that is configured to receive a pile of sheets on a pallet, turning the pile of sheets on the pallet up-side-down, releasing the pallet from the pile of sheets, creating a free end, which relative position of the free end between the sheet removing unit and the PPU is adjustable for engagement of the side support plate and adjustable for the insertion or attack of one or more attack knives.

Such cooperatively arrangement advantageously allows for the removal of sheets that may have been damaged by interfacing the whole pile of sheets and the pallet on which the pile previously has been handled on.

An object of the invention is further achieved by a method of preparing a pile of sheets for processing. The method comprises the following acts.

Providing a pile of sheets to be processed and having a free end and a side of sheet edges.

Inserting one or more attack knives in a first attack movement in the attack direction and in between a pair of sheets.

Lifting one or more attack knives. The act of lifting may be the lifting of a small razor shaped first attack knife.

There may be an act of inserting one or more attack knives deeper in a second attack movement.

Before the act of inserting the first attack knife the method comprises the following acts.

An act of providing a pile remover system comprising a marking unit arranged to mark the sheet on an uncovered free end of the pile of sheets

An act of marking the sheet on an uncovered free end of the pile of sheets with said marking unit.

An act of engaging a side support face on a sheet removing unit in an attack direction to the side of the sheet edges at the free end.

Optionally there may be acts of performing one or more of the following acts.

There may be an act of traversing one or more of the interested attack knives in a transverse movement that is transverse to the line of attack direction and parallel to the sheet edges.

There may be an act of grapping a number of sheets from the free end of the pile of sheets.

There may be an act of removing the number of sheets from the free end.

An object may further be achieved by a method of preparing a pile of sheets for processing, where the act of providing a pile of sheets is performed in a PPU.

The PPU may be configured to receive and rotate a pile of sheets on a pallet.

The use of a PPU may involve the following acts.

There may be an act of rotating the pile of sheets on the pallet up-side-down.

There may be an act of releasing the pallet from the pile of sheets creating a free end. There may be an act of adjusting the position repeatedly of the created free end for the acts of engaging and inserting.

There may be an act of applying the released pallet or another pallet to the created free end.

There may be an act of rotating the pile of sheets with the applied pallet.

The invention can advantageously be combined with one or more of the following five independent non-claimed inventions and the following five non-claimed inventions can be combined with each other.

A first independent non-claimed invention may be a conveyor with a belt for transporting an object between a first end and a second end of the conveyor. The conveyor comprises a first belt drive transmission at the first end and a second belt drive transmission at the second end. The drive transmission may be configured as freewheel-types in respective directions.

The conveyor comprisesan intermediate transmission system arranged between the first end and the second end and having a first communication with the first belt drive transmission and having a second communication with the second belt drive transmission.

The conveyor comprises drive system in communication with a drive shaft in the intermediate transmission system, and may be configured to turn the drive shaft bidirectional in a first drive direction and a second drive direction.

The conveyor may be configured with the drive shaft having an intermediate communication with the first communication through a first intermediate transmission and the second communication through a second intermediate transmission.

The disclosed conveyor is compact and low weight, which allows for installation with in industrial process equipment. The conveyer may be adapted to be rotated in a pile preparation unit. The conveyor is reversible, and has a single centre positioned drive system. The conveyor may transport heavy loads and with an equal load and equal torque in the forward and reverse directions. The conveyor eliminates or counteracts any "push" forces on the belt.

In an aspect, the first intermediate transmission is configured for engagement and force transmission at a first engagement position in the first drive direction and a second engagement position in the second drive direction and in-between having a first path of un-engagement.

In an aspect, the second intermediate transmission is configured for engagement and force transmission at a first engagement position in the first drive direction and a second engagement position in the second drive direction and in-between having a second path of un-engagement.

In an aspect, the intermediate communication is arranged so that for the first drive direction, the first intermediate transmission is enabled for engagement at the first engagement position whilst the second intermediate transmission is in the second path of un-engagement. For the same aspect and for the second drive direction, the second intermediate transmission is enabled for engagement at the second engagement position whilst the first intermediate transmission is in the first path of un-engagement.

Thereby is achieved that the conveyor for the first drive direction, engages the first belt drive transmission for a first pull of the belt towards the first end whilst free-wheeling the second belt drive transmission. For the second drive direction it is achieved that the second belt drive transmission engages for a second pull of the belt towards the second end whilst free-wheeling the first belt drive transmission.

Such conveyor will pull towards the respective first and second end whilst releasing tension in respective opposite ends. By pull is understood that traction power or a traction force is applied from the respective first or second end of the conveyor. This will allow the conveyor to transport heavy objects back and forth without building-up tension. A further advantage is that tensions are released during use situations of "asymmetric load" where a heavy object is transported in one direction, substantially offloaded and then reversed as a light object. A further advantage is that the configuration results in a flat structure of the conveyor in a direction transverse to the face of the belt for engaging with the object.

In an aspect the intermediate communication comprises an intermediate chain engaging with a drive cogwheel on the driveshaft, a first intermediate drive cogwheel on the first intermediate transmission and a second intermediate drive cogwheel on the second intermediate transmission. In an aspect the first and second communications comprise respective first and second communication chains engaging respective first and second belt cogwheels in the respective first and second belt drive transmissions with respective first and second communication cogwheels in the respective first and second intermediate transmissions. In an aspect the respective first and second intermediate transmissions each has a respective first and second intermediate drive cogwheel and a respective first and second communication cogwheel sharing respective common first and second intermediate shafts. Furthermore, the respective first and second intermediate transmission may be configured with engagement means to transmit force at least from the respective first and second drive intermediate cogwheels to the respective first and second communication cogwheels.

Hereby is achieved that the intermediate transmission can apply a pull or traction force to the respective first and second ends of the conveyor. The engagement or appliance of a force then depends on the direction of rotation so that a pull or traction force is from one end of a conveyor for one direction of rotation of the drive and that a pull or traction force is from the other end of the conveyor for an opposite direction of rotation of the drive.

A second independent non-claimed invention may be a pile preparation unit (PPU) for preparing a pile of sheets. The pile of sheets has a first end, which first end is optionally standing on a pallet, and opposite a free second end, a front edge side and a side edge side.

The PPU comprises a rotation base configured for standing on a floor and for supporting a rotation unit, configured with an infeed side for receiving a pile of sheets in a feed direction. The pile of sheets may optionally be on a pallet. The rotation unit comprises a rotation unit frame with a rotation unit frame cross section. The rotation unit may be configured with an edge side support unit, configured with an edge side support face to support an edge side of the pile of sheets when the pile of sheets is in a rotated position to lean on the edge side support face. The rotation unit comprises a lift unit configured to engage a lift plate to the free second end of the pile of sheets in the pile preparation position and to lift a pile of sheets.

In an aspect of the pile preparation unit (PPU), the rotation unit frame comprises two guides shifted in the feed direction relative to each other and each fixed to the rotation base and guiding a belt driven by a rotation unit drive system in the rotation base. The belt may be a timing belt. The belt may be a chain.

It is understood that the pile of sheets does not form part of the invention. However for clarity and understanding, the pile of sheets is an object to which the pile preparation unit is directed to. A person skilled in the art will thus appreciate modifications of the PPU according to variations in a size or shape of a pile of sheets.

Thus the PPU provides an effective and automated apparatus for preparing a pile of sheets for processing. The disclosed PPU may handle piles of sheets of a multiplicity of types of pile-shapes and -sizes as well as a multiplicity of sheet types and weights. The disclosed PPU saves time, the PPU allows for a quick setup for a new material in a pile of sheets. Piles prepared by the PPU will be more identical and PPU will provide a substantially constant throughput. The PPU may be fully integrated in an ERP system.

The rotation unit may rotate about a rotational axis, which axis may the feed direction. The rotation unit may be configured to rotate a conveyor about the feed direction. The conveyor may be configured to transport a pallet with a pile of sheets from the infeed side in the feed direction to a pile preparation position. In an aspect the belts encircle the conveyor.

A third independent non-claimed invention may be related to changing the location of a pallet from one side of a pile of sheets to the opposite side of the pile of sheets, the following aspects of the invention is disclosed. The changing of the location of a pallet may also involve the exchange of a first pallet with a second pallet. The first pallet may be a disposable pallet such as a EUR-pallet and the second pallet may be a process pallet. A process pallet may be a type of pallet that is used in a specific clean environment.

In an aspect the rotating unit comprises a first conveyor configured to rotate with the rotating structure and the lift unit comprises a second conveyor configured as a second lift plate. This allows automatic handling and to extract existing process pallet and reuse it and apply on same pile of sheets after turning the pile 180 degrees.

In an aspect the lift unit comprises a first lift plate and a second lift plate, each configured to move and position in the lift structure to engage to the respective first end and second end of the pile of sheets.

Thereby providing a plate or face which position can be changed to support or carry a pile of sheets at the bottom and/or be removed from the top to generate the portal or space or volume required.

In an aspect the pile preparation unit may be for exchanging a first pallet with a second pallet. The pallet change module comprises a first pallet portal with movable first pallet engagement means arranged to extend to an extraction position in the rotation unit. The pallet change module comprises a second pallet portal with movable second pallet engagement means, arranged to extend to a delivery position in the rotation unit the first and second pallet portal vertically separated.

The lift unit may be configured to move and position the lift plate for the pallet end of the pile of sheets to be positioned at the respective extraction position and delivery position.

A fourth independent non-claimed invention may be a pile preparation unit for changing a first pallet with a second pallet, the pallets for supporting a pile of sheets with a first end and second end where the pallet has a support side, supporting the pile of sheets at the first end and an opposite base side.

The pile preparation unit comprises a rotation unit configured with an infeed opening for receiving a pallet with a pile of sheets. The rotation unit is configured with a rotating structure to rotate a lift unit about a rotational axis.

The lift unit may be configured with a lift structure fixed to the rotating structure and has a lift plate movable along the lift structure to engage with the second end of the pile of sheets and to move and position the pile of sheets transverse, relative to the rotational axis, providing a portal for changing a pallet.

The pallet preparation unit comprises a pallet change module comprising a pallet portal with movable pallet engagement means for engaging with a pallet, for extraction from and/or insertion into the portal formed in an upper section of the rotation unit, when the lift plate is in the lower section of the rotation unit.

By a portal is understood a space or volume created where further actions or preparations can be performed. In particular this may involve actions or preparations where the pile of sheets being is to be prepared on a free end of the pile. Such actions may be a removal or extraction of a pallet, the insertion or delivery of a pallet, or both. Actions may also be a removal of sheets from the established free end of the pile.

The pallet preparation unit may thus receive a pile of sheets and exchange one pallet with another pallet in an automated fashion. The rotation unit comprises a unit frame with a rotation unit frame cross section. The rotation unit may be configured to rotate a conveyer about the feed direction. The conveyer may be configured to transport a pallet with a pile of sheets from the infeed side in the feed direction to a pile preparation position.

In an aspect the pallet change module comprises a first pallet portal with movable first pallet engagement means arranged to extend to an extraction position in the rotation unit.

The pallet change module comprises a second pallet portal with movable second pallet engagement means arranged to extend to a delivery position in the rotation unit, where the first and second pallet portals are vertically separated.

The lift may be configured to move and position the lift plate for the pallet end of the pile of sheets to be positioned at the respective extraction position and delivery position.

In an aspect the pallet change module is arranged on the side of the rotation unit and to extend the pallet engagement means, the first or second or both pallet engagement means into the rotation unit from a transverse direction to the rotational axis. The direction of insertion may be essentially horizontal and the pallet change module may be arranged on the side of the rotation unit relative to the infeed on a front. The pallet change module comprises guides and supports as required to achieve a horizontal movement of a pallet. Likewise the engagement means are complementary in shape to the pallets. The engagement means may be adjustable to enable a fit to pallets of different types. A person skilled in the art will appreciate a need to perform adjustments and balance or dimension the construction as required for a pallet of a specific type to be moved in the pallet portal. Counterweights may be required. Similarly actuators may be required to adjust the position and the placement of the engagement means and thus the positioning of the pallet. The drive system may be a belt drive type of system that drives the movement. In one embodiment the first and second pallet engagement means may be identical.

In an aspect the pile preparation unit may further comprise a pallet loading unit arranged on the opposite side of the pallet change module and with a pallet loading arm fixed to the rotation unit. The pallet loading arm is configured to engage with and support a second pallet during rotation of the rotating unit and to release the second pallet on the second pallet engagement means. The pallet loading unit is configured to engage with and support a second pallet during rotation of the rotating unit and to release the second pallet on the second pallet engagement means. The pallet loading unit may be configured with a pallet loading arm fixed to the rotating structure of the rotation unit and for engaging with a second pallet so that when the rotating unit rotates the pile of sheets the loading arm transports the second pallet, and turns it upside-down for delivery of the second pallet on the second pallet engagement means in the correct orientation for immediate insertion into the portal.

A fifth independent non-claimed invention may be a pile sheet remover system (PSR) for preparing a pile of sheets with a height, a free end, and a side of sheet edges for processing in a pile preparation unit (PPU).

The PSR comprises a sheet removing unit having a support frame supporting a moving frame, configured for a linear movement in an attack direction towards the side and the free end of the pile of sheets.

The moving frame comprises a side support plate with a side support face arranged to face and apply to the side of the pile of sheets.

The PSR comprises a grab plate arranged with a grab face essentially perpendicular to the side support face and extending beyond the side support face in the attack direction, configured with a grab actuator for a grab movement towards the free end of the pile of sheets.

The PSR comprises one or more attack knives arranged below the grab plate to face the side of the pile of sheets, and configured with one or more attack actuators for a first attack movement in the attack direction for insertion of the one or more attack knives between a pair of sheets, i.e. between two adjacent sheets

It is thereby achieved that top sheets can be removed automatically. Furthermore the arrangement can be adjusted according to different characteristics of a pile of sheets. A further advantage is that the system can be arranged in a pile preparation unit, which in other aspects such are turning the pile, airing the pile or changing of a pallet or the location of the pallet.

In an aspect there is a first attack knife for a first attack movement and a second attack knife for a second attack movement. The first attack knife may be a smaller knife with a blade in the attack direction. The first knife may be a razor blade type of knife. The second attack knife may be larger than the first knife and with a sharp and point type of form in the attack direction. The knife may also be a stylus type of shape.

In an aspect one or more second attack knives are configured with one or more transverse actuators for a movement transverse to the line of attack direction and parallel to the sheet edges. The knives used for the transverse movement may be second attack knives. There may be one knife for a transverse movement from a center area to a periphery. There may be another knife for a transverse movement from the center area to a periphery on the other side. There may be two second attack knives, each being configured with individual transverse actuators.

This effectively separates sheets to be removed from the remaining sheets. A further advantage is that the transverse movement leaves the knives in a favorable position when the actual removal takes place and thus decreases the risk of destroying the sheets.

In an aspect one or more first attack knives are configured with one or more edge lift actuators for a lift movement transverse to the line-of-attack direction and perpendicular to the sheet edges. The lift movement lifts the edge of the sheets upwardly and thus makes it possible for a further insertion into the sheets. Advantageously the movement is performed swiftly to increase the separation of sheets. The lift actuators may be pneumatic actuators. The actuators may be adjustable in action length or speed.

In an aspect one or more attack knives are configured for a second attack movement extending the first attack movement in the attack direction for further insertion of the one or more attack knives between the pair of sheets. This second movement may be provided by the same actuator used for the first movement. The second movement may also be provided by additional actuators. Thus there may be a first set of actuators and a second set of actuators.

### Description of the Drawing

Embodiments of the invention will be described in the figures, whereon:
- Fig. 1: illustrates a pile of sheets inside a pile preparation unit and part of a pile sheet remover;
- Fig. 2: illustrates the pile sheet remover system;
- Fig. 3: illustrates the removal of a sheet;
- Fig. 4: illustrates the marking unit;
- Fig. 5: illustrates a close-up of the marking unit;
- Fig. 6: illustrates a pile sheet remover cooperating with a marking unit; and
- Fig. 7: illustrates a pile sheet remover system connected with a pile preparation unit.
- Fig. 8: illustrates a method of preparing a pile of sheets for processing including removing a number of sheets from the pile; and
- Fig. 9: illustrates a method of preparing a pile of sheets for processing further including rotating the pile of sheets before removing a number of sheets from the pile.

### Detailed Description of the Invention

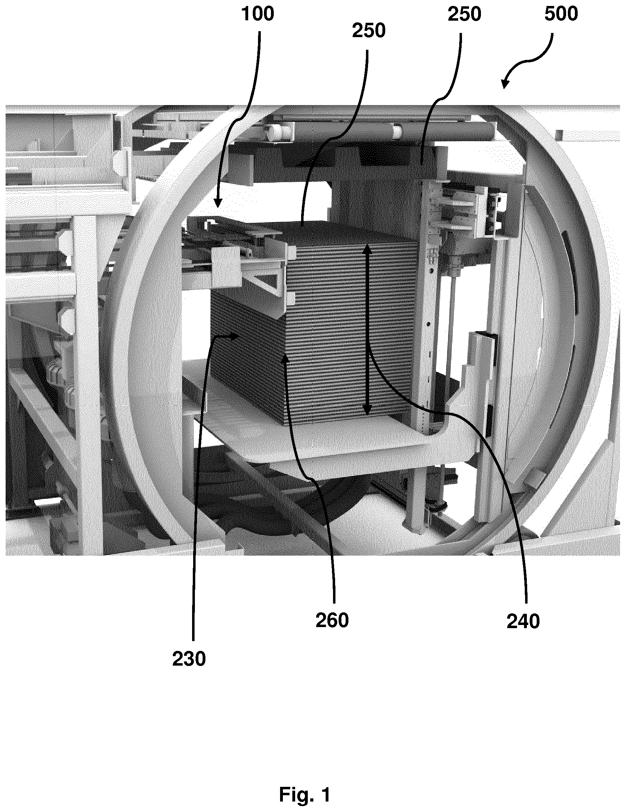

Figure 1 illustrates a pile of sheets 210 inside a PPU 500. The pile of sheets 210 has a height 240, a free end 250 and a side 230 of sheet edges 260. A PSR 100 is positioned next to the free end 250 of the pile of sheets 210.

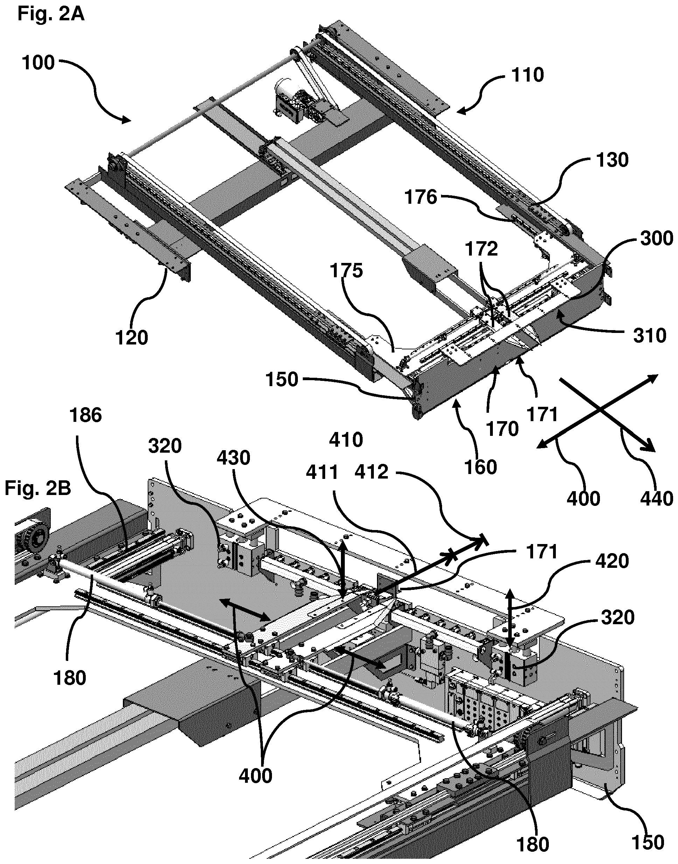

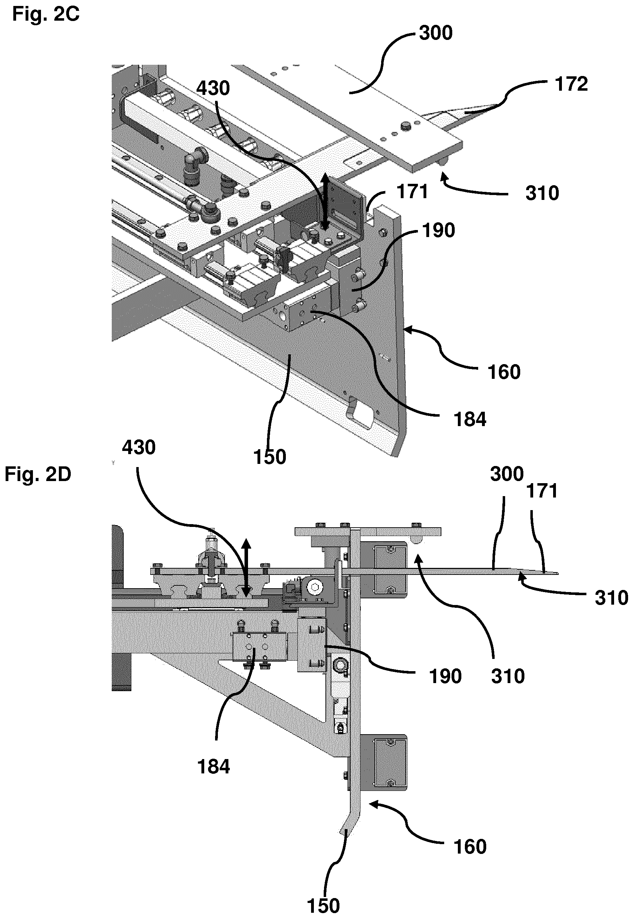

Figure 2 illustrates the PSR 100.

Figure 2A illustrates a top view of the PSR 100 having a sheet removing unit 110 with a support frame 120 supporting a moving frame 130.

The moving frame is configured for a linear movement in an attack direction 440 towards the side 230 and the free end 250 of the pile of sheets 210. The moving frame 130 has a side support plate 150 with a side support face 160 arranged to face and apply to the side 230 of the pile of sheets 210.

The PSR 100 has a grab plate 300. The grab plate 300 is arranged with a grab face 310 essentially perpendicular to the side support face 160 and extending beyond the side support face 160 in the attack direction 440. The grab plate 300 is configured with a grab actuator 320 for a grab movement 420 towards the free end 250 of the pile of sheets 210.

Figure 2B illustrates a close-up of the PSR 100 front.

In the figure the PSR100 has two attack knives 170 arranged, below the grab plate 300, to face the side 230 of the pile of sheets 210. The two attack knives 170 are configured in an attack knives support 175 movable in an attack knives support guide 176 in the moving frame 130 with one or more attack actuators 184, 186 (see figures 2C and 2D) for at least an attack movement and here first attack movement 410 and a second attack movement 412 in the attack direction 440 for insertion of two attack knives 170 between a pair of sheets 220.

In this embodiment the PSR 100 has two attack knives 170 and two attack actuators, a first attack actuator 184 and a second attack actuator 186 (see figured 2C and 2D).

In figure 2B the PSR 100 has two attack knives 170 configured with two transverse actuators 180 for a transverse movement 400. The transverse movement 400 is transverse to the line of the attack direction 440 and parallel to the sheet edges 260.

In another embodiment the PSR 100 may have one or more attack knives 170 and one or more transverse actuators 180.

In figure 2B the PSR 100 has two attack knives 170, which are configured with an edge lift actuators 190 (see figures 2C and 2D) for a lift movement 430 transverse to the line of attack direction 440 and perpendicular to direction the sheet edges 260, i.e. the lift movement 430 is perpendicular to the line of attack direction 440 and the transverse direction 400.

In another embodiment the PSR 100 has one or more attack knives 170 and one or more edge lift actuators 190.

In figure 2B the PSR 100 has two attack knives 170, which are configured for a second attack movement 412 extending the first attack movement 410 in the attack direction 440 for further insertion of the two knives 170 between the pair of sheets 220. The second attack movement 412 may be a result of activation of second attack actuators 186 (see details in figures 2C and 2D).

In one embodiment the PSR 100 has one or more attack knives 170 configured with an upwardly one-sided Chisel-type of edge and optionally a substantially linear edge extending opposite to the attack direction 440.

Figure 2C and 2D illustrate a cross-section of the front end of a PSR 100 from figures 2A and 2B. The cross section is in the center of the PSR 100 in the transverse direction.

In particular the figure illustrates exemplary details of the configuration of the lift actuator 190 connected to the side support plate 150 and for activating the lift movement 430 of the attack-knives 170.

The first attack actuator 184 is here a pneumatic-type actuator for a possible distinct sharp movement. The lift actuator 190 is here a pneumatic-type actuator for a possible distinct sharp movement. The second attack actuator 186 is here an actuator for a continuous and slower linear motion as compared to the distinct sharp movement.

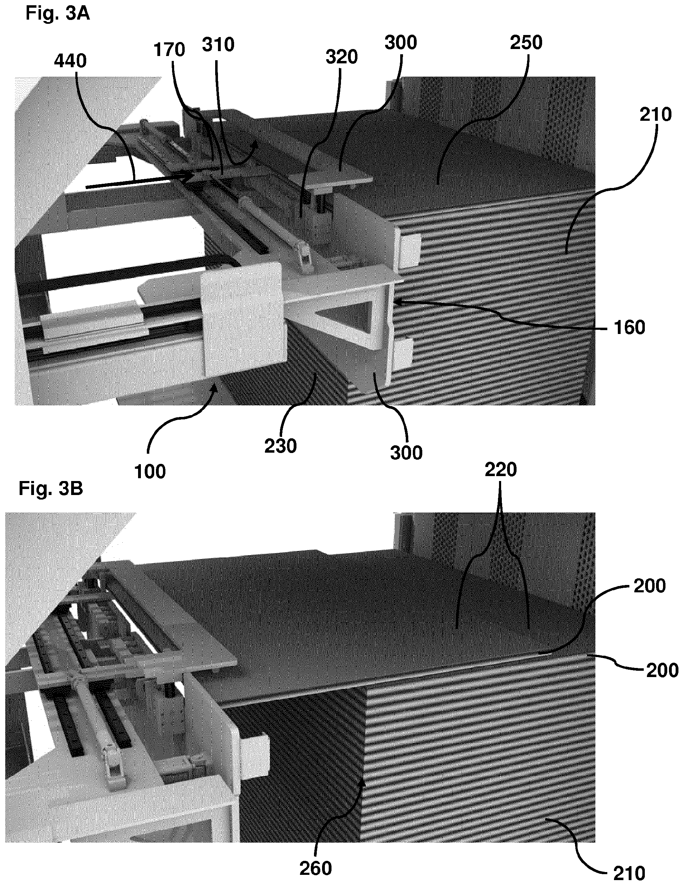

Figure 3A and 3B illustrate the removal of a sheet 200.

In figure 3A the side support face 150 is connected to the side 230 of the pile of sheets 210 and the two attack knives 170 have performed a first attack movement 410 in the attack direction. The attack knives 170 may perform a second attack movement 412.

The attack knives 170 are inserted between a pair of sheets 220.

The grab plate 300 makes a grab movement 420 between figure 3A and 3B and the PSR 100 moves in the reverse attack direction 440.

In figure 3B a single sheet 200 is removed from the pile of sheets 210.

Adjusting the position of the pile of sheets will regulate the position of attack into the pile of sheets and more sheets may be removed from the pile of sheets 210.

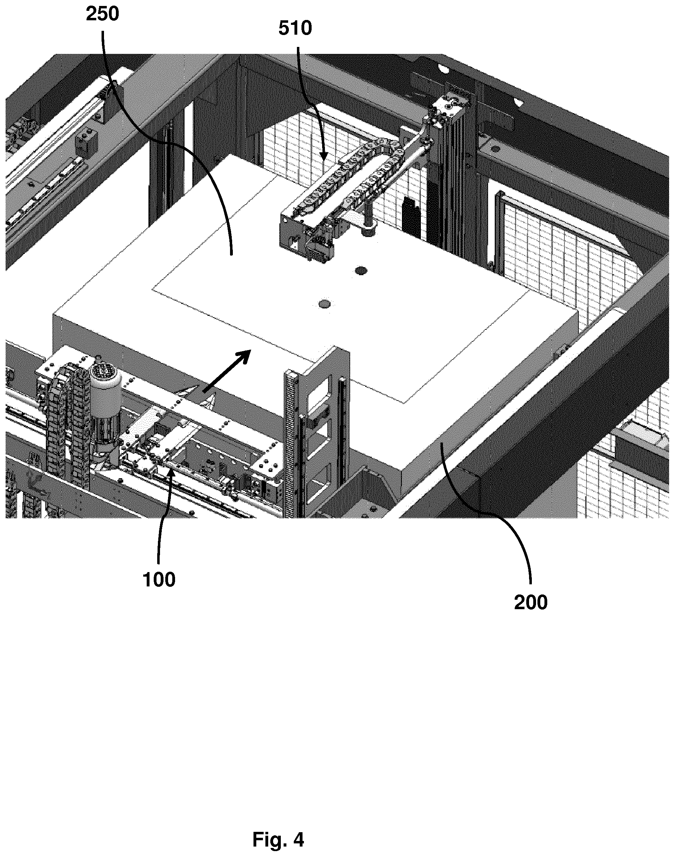

Figure 4 illustrates the marking unit 510 arranged to mark the sheet on the uncovered free end 250 of the pile of sheets 210.

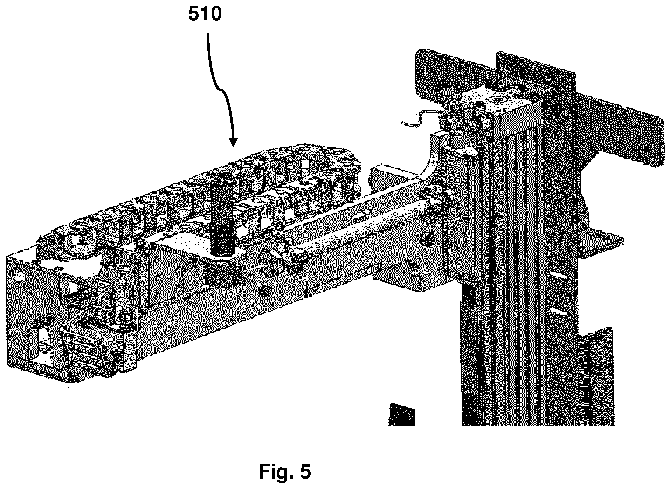

Figure 5 illustrates a close-up of a marking unit 510. The marking unit 510 is configured to position a marker and to mark a sheet (not seen). The position of the marker, before marking, can be adjusted as is evident from the figure.

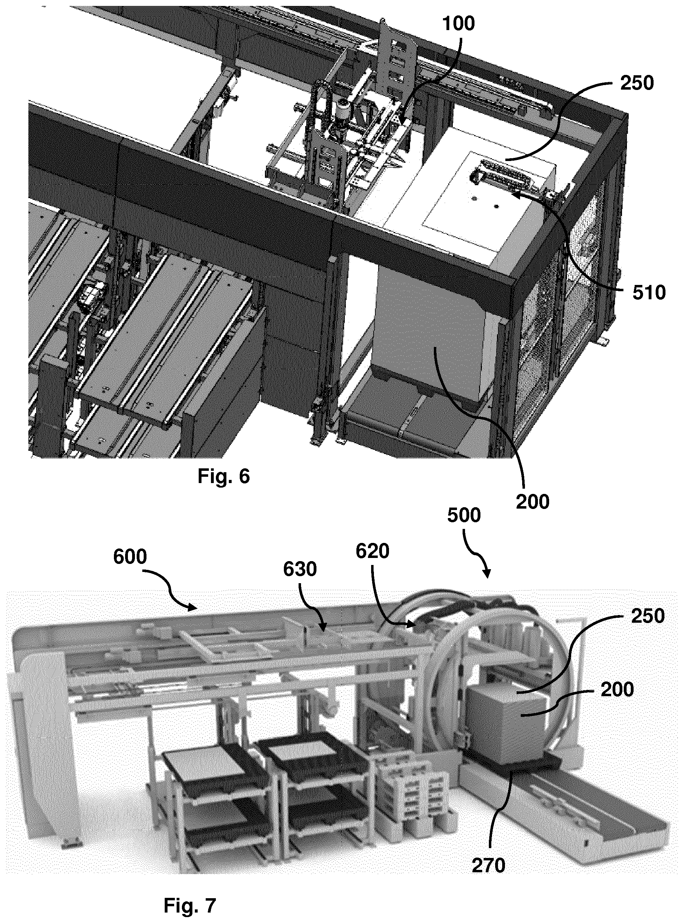

Figure 6 illustrates a pile preparation unit implementation with a marking unit 510 and a pile sheet removal unit 100 arranged for marking of a sheet 200 laid free after removal of one or more sheets and thus establishing a new free end 250.

Figure 7 illustrates a PSR 100 connected with a PPU 500. The sheet removing unit 110 is arranged cooperatively with the PPU 500 that is configured to receive a pile of sheets 210 on a pallet 270 and for turning the pile of sheets on the pallet upside down. The PPU 500 is configured for releasing the pallet 270 from the pile of sheets 210 creating a free end 250. The free end 250 has a relative position between the sheet removing unit 110 and the PPU 500 that is adjustable for engagement of the side support plate 150 and adjustable for the insertion or attack of one or more attack knives 170.

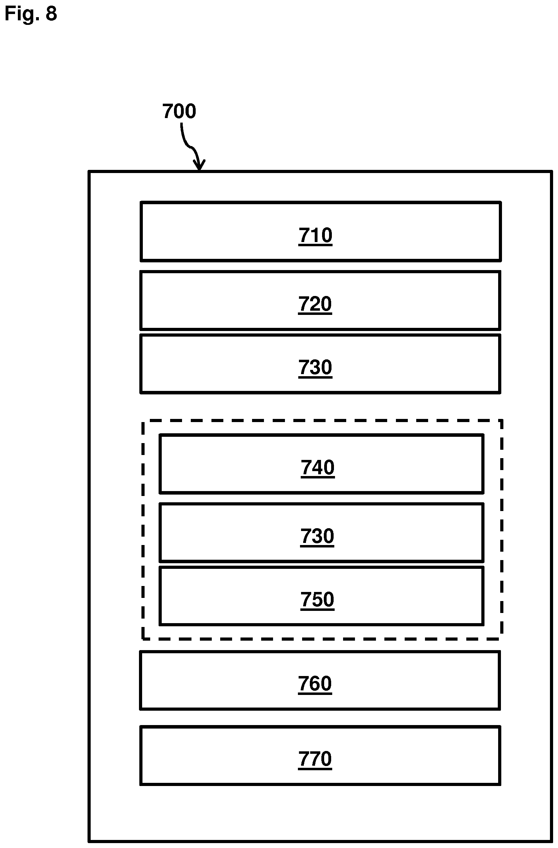

Figure 8 illustrates a method 700 of preparing a pile of sheets 210 for processing

The method comprises the following acts.

There is an act of providing 710 a pile of sheets 210 to be processed and having a free end 250 and a side 230 of sheet edges 260.
There is an act of engaging 720 a side support face 160 on a sheet removing unit 110 in an attack direction 440 to the side 230 of the sheet edges at the free end 250.

There is an act of inserting 730 one or more attack knives 170 in a first attack movement 410 in the attack direction 440 and in between a pair of sheets.

Optionally there are one or more of the following optional acts.

There is an optional act of lifting 740 the attack knives 170.

There is an optional act of inserting 730 deeper one or more attack knives 170 in a second attack movement.

There is an optional act of traversing 750 one or more of the interested attack knives in a transverse movement 400 transverse to the line of attack direction 440 and parallel to the sheet edges 260.

There is an act of grapping 760 a number of sheets from the free end 250 of the pile of sheets 210.

There is an act of removing 770 the number of sheets from the free end 250 by performing a movement in the reverse direction of the attack direction.

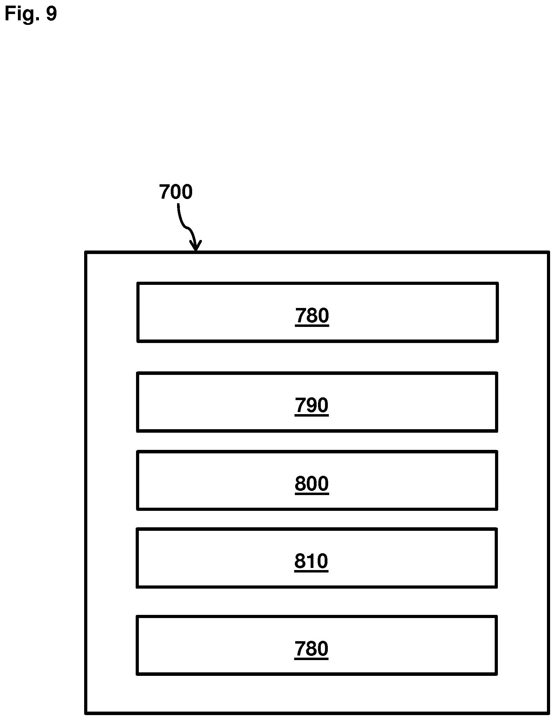

Figure 9 illustrates further method with additional acts as disclosed in figure 8.

The method 700 of preparing a pile of sheets 210 for processing as disclosed and wherein the act of providing 710 a pile of sheets is performed in a pile preparation unit 500 that is configured to receive and rotate a pile of sheets on a pallet 270. The method 700 has further comprising acts as follows.

There is an act of rotating 780 the pile of sheets on the pallet up-side-down. There is an act of releasing 790 the pallet from the pile of sheets creating a free end 250. There is an act of adjusting 800 the position repeatedly of the created free end 250 for the acts of engaging and inserting. There is an act of applying 810 the released pallet or another pallet to the created free end 250), and there is an act of rotating 780 the pile of sheets with the applied pallet.

The acts may be performed by a pile preparation unit 500 illustrated in figure 7.

| **Item** | **No** |
|---|---|
| Pile sheet remover system | 100 |
| Sheet removing unit | 110 |
| Support frame | 120 |
| Moving frame | 130 |
| Side support plate | 150 |
| Side support face | 160 |
| Attack knives | 170 |
| First attack knife | 171 |
| Second attack knife | 172 |
| Attack knife support | 175 |
| Attack knife support guide | 176 |
| Transverse actuators | 180 |
| First attack actuator | 184 |
| Second attack actuator | 186 |
| Lift Actuators | 190 |
| Sheet | 200 |
| Pile of sheets | 210 |
| Pair of sheets | 220 |
| Side | 230 |
| Height | 240 |
| Free end | 250 |
| Sheet edge | 260 |
| Pallet | 270 |
| Grab plate | 300 |
| Grab face | 310 |
| Grab actuator | 320 |
| Transverse movement | 400 |
| Attack movement | 410 |
| First attack movement | 411 |
| Second attack movement | 412 |
| Grab movement | 420 |
| Lift movement | 430 |
| Attack direction | 440 |
| Pile preparation unit | 500 |
| Marking unit | 510 |
| Control unit | 520 |
| Pallet change module | 600 |
| Pallet portal | 620 |
| Movable pallet engagement means | 630 |
| Method | 700 |
| Providing | 710 |
| Engaging | 720 |
| Inserting | 730 |
| Lifting | 740 |
| Traversing | 750 |
| Grapping | 760 |
| Removing | 770 |
| Rotating | 780 |
| Releasing | 790 |
| Adjusting | 800 |
| Applying | 810 |

## Claims

1. A pile sheet remover system (100) for preparing a pile of sheets (210) with a height (240), a free end (250) and a side (230) of sheet edges (260) for processing in a pile preparation unit (PPU), the system comprising:
- a sheet removing unit (110) having a support frame (120) supporting a moving frame (130) configured for a linear movement in an attack direction (440) towards the side (230) and the free end (250) of the pile of sheets (210), the moving frame (130) having a side support plate (150) with a side support face (160) arranged to face and to apply to the side (230) of the pile of sheets (210),
- a grab plate (300) arranged with a grab face (310) essentially perpendicular to the side support face (160) and extending beyond the side support face (160) in the attack direction (440) and configured with a grab actuator (320) for a grab movement (420) towards the free end (250) of the pile of sheets (210),
- one or more attack knives (170) arranged to face the side (230) of the pile of sheets (210) and configured with one or more attack actuators (184) for at least one attack movement (410) in the attack direction (440) for insertion of the one or more attack knives (170) between a pair of sheets (220),
wherein there is a first attack knife (171) for a first attack movement (411) and a second attack knife (172) for a second attack movement (412); wherein the first attack knife (171) is a smaller knife with a blade in the attack direction (440) and the second attack knife (172) is a larger knife, **characterized in that** the pile sheet remover system (100) further comprises:
- a marking unit (510) arranged to mark the sheet on an uncovered free end (250) of the pile of sheets (210).

2. The pile sheet remover system (100) according to claim 1, wherein one or more first attack knives (170, 171) are configured with one or more edge lift actuators (190) for a lift movement (430) transverse to the line of attack direction (440) and perpendicular to the direction of sheet edges (260).

3. The pile sheet remover system (100) according to any preceding claim, wherein one or more second attack knives (170,172) are configured with one or more transverse actuators (180) for a transverse movement (400) that is transverse to the line of the attack direction (440) and parallel to the sheet edges (260).

4. The pile sheet remover system (100) according to any preceding claim, wherein one or more attack knives (170, 172) are configured for a second attack movement (412) extending the first attack movement (410) in the attack direction (440) for further insertion of the one or more attack knives (170) between the pair of sheets (220).

5. The pile sheet remover system (100) according to any preceding claim, wherein one or more attack knives (170) are configured with an upwardly one-sided Chisel-type of edge and optionally a substantially linear edge extending opposite to the attack direction (440).

6. The pile sheet remover system (100) according to any preceding claim being arranged in a pallet change module (600) comprising a pallet portal (620) with movable pallet engagement means (630) for engaging with a pallet (270) for extraction from and/or insertion of a pallet (270).

7. The pile sheet remover system (100) according to any preceding claim, wherein the sheet removing unit (110) is arranged cooperatively with a pile preparation unit (500) that is configured to receive a pile of sheets (210) on a pallet (270), turning the pile of sheets on the pallet up-side-down, releasing the pallet from the pile of sheets creating a free end (250), which relative position of the free end (250) between the sheet removing unit (110) and the pile preparation unit (500) is adjustable for engagement of side support plate (150) and adjustable for the insertion or attack of one or more attack knives (170).

8. A method (700) of preparing a pile of sheets (210) for processing, the method comprising acts of:
- Providing (710) a pile of sheets (210) to be processed and having a free end (250) and a side (230) of sheet edges (260);
- Inserting (730) a first attack knife (171) in a first attack movement (411) in the attack direction (440) and in between a pair of sheets;
- Lifting (740) the first attack knife (171);
- Inserting (730) deeper one or more second attack knives (172) in a second attack movement (412);
Optionally performing one or more of the following acts:
- Traversing (750) one or more of the interested attack knives in a transverse movement (400) transverse to the line of attack direction (440) and parallel to the sheet edges (260);
- Grapping (760) a number of sheets from the free end (250) of the pile of sheets (210);
- Removing (770) the number of sheets from the free end (250); **characterized in that** the method before the act of inserting (730) the first attack knife (171) further comprises acts of:
- Providing a pile remover system (100) comprising a marking unit (510) arranged to mark the sheet on an uncovered free end (250) of the pile of sheets (210);
- Marking the sheet on an uncovered free end (250) of the pile of sheets (210) with said marking unit (510); and
- Engaging (720) a side support face (160) on a sheet removing unit (110) in an attack direction (440) to the side (230) of the sheet edges at the free end (250).

9. The method (700) of preparing a pile of sheets (210) for processing according to claim 8, wherein the act of providing a pile of sheets is performed in a pile preparation unit (500) that is configured to receive and rotate a pile of sheets on a pallet (270), and further comprising acts of:
- Rotating (780) the pile of sheets on the pallet up-side-down;
- Releasing (790) the pallet from the pile of sheets creating a free end (250);
- Adjusting (800) the position repeatedly of the created free end (250) for the acts of engaging and inserting;
- Applying (810) the released pallet or another pallet to the created free end (250); and
- Rotating (780) the pile of sheets with the applied pallet.

## Patentansprüche

1. Folienstapelentfernersystem (100) zum Vorbereiten eines Stapels von Folien (210) mit einer Höhe (240), einem freien Ende (250) und einer Seite (230) von Folienrändern (260) zum Verarbeiten in einer Stapelvorbereitungseinheit (pile preparation unit - PPU), wobei das System Folgendes umfasst:
- eine Folienentfernungseinheit (110), die einen Stützrahmen (120) aufweist, der einen sich bewegenden Rahmen (130) stützt, der zu einer linearen Bewegung in einer Angriffsrichtung (440) zu der Seite (230) und dem freien Ende (250) des Stapels von Folien (210) konfiguriert ist, wobei der sich bewegende Rahmen (130) eine Seitenstützplatte (150) mit einer Seitenstützfläche (160) aufweist, die dazu angeordnet ist, der Seite (230) des Stapels von Folien (210) zugewandt zu sein und auf diese zu wirken,
- eine Griffplatte (300), die mit einer Grifffläche (310) angeordnet ist, die im Wesentlichen senkrecht zu der Seitenstützfläche (160) ist und sich über die Seitenstützfläche (160) hinaus in die Angriffsrichtung (440) erstreckt und mit einem Griffbetätigungselement (320) für eine Griffbewegung (420) zu dem freien Ende (250) des Stapels von Folien (210) konfiguriert ist,
- ein oder mehrere Angriffsmesser (170), die dazu angeordnet sind, der Seite (230) des Stapels von Folien (210) zugewandt zu sein, und die mit einem oder mehreren Angriffsbetätigungselementen (184) für mindestens eine Angriffsbewegung (410) in die Angriffsrichtung (440) zum Einführen des einen oder der mehreren Angriffsmesser (170) zwischen einem Paar von Folien (220) konfiguriert sind,
wobei es ein erstes Angriffsmesser (171) für eine erste Angriffsbewegung (411) und ein zweites Angriffsmesser (172) für eine zweite Angriffsbewegung (412) gibt; wobei das erste Angriffsmesser (171) ein kleineres Messer mit einer Klinge in der Angriffsrichtung (440) ist und das zweite Angriffsmesser (172) ein größeres Messer ist, **dadurch gekennzeichnet, dass** das Folienstapelentfernersystem (100) ferner Folgendes umfasst:
- eine Markierungseinheit (510), die dazu angeordnet ist, die Folie auf einem nicht bedeckten freien Ende (250) des Stapels von Folien (210) zu markieren.

2. Folienstapelentfernersystem (100) nach Anspruch 1, wobei ein oder mehrere erste Angriffsmesser (170, 171) mit einem oder mehreren Kantenhubbetätigungselementen (190) für eine Hubbewegung (430) quer zu der Linie der Angriffsrichtung (440) und senkrecht zu der Richtung der Folienkanten (260) konfiguriert sind.

3. Folienstapelentfernersystem (100) nach einem der vorhergehenden Ansprüche, wobei ein oder mehrere zweite Angriffsmesser (170, 172) mit einem oder mehreren Querbetätigungselementen (180) für eine Querbewegung (400) konfiguriert sind, die quer zu der Linie der Angriffsrichtung (440) und parallel zu den Folienkanten (260) verläuft.

4. Folienstapelentfernersystem (100) nach einem der vorhergehenden Ansprüche, wobei ein oder mehrere Angriffsmesser (170, 172) für eine zweite Angriffsbewegung (412) konfiguriert sind, die die erste Angriffsbewegung (410) in die Angriffsrichtung (440) zum weiteren Einführen des einen oder der mehreren Angriffsmesser (170) zwischen das Paar von Folien (220) erstreckt.

5. Folienstapelentfernersystem (100) nach einem der vorhergehenden Ansprüche, wobei ein oder mehrere Angriffsmesser (170) mit einer nach oben einseitigen meißelartigen Kante und wahlweise einer im Wesentlichen linearen Kante konfiguriert sind, die sich entgegengesetzt zu der Angriffsrichtung (440) erstreckt.

6. Folienstapelentfernersystem (100) nach einem der vorhergehenden Ansprüche, das in einem Palettenwechselmodul (600) angeordnet ist, das ein Palettenportal (620) mit beweglichen Paletteneingriffsmitteln (630) zum Eingreifen in eine Palette (270) zum Extrahieren aus und/oder Einführen von einer Palette (270) umfasst.

7. Folienstapelentfernersystem (100) nach einem der vorhergehenden Ansprüche, wobei die Folienentfernungseinheit (110) kooperativ mit einer Stapelvorbereitungseinheit (500) angeordnet ist, die dazu konfiguriert ist, einen Stapel von Folien (210) auf einer Palette (270) aufzunehmen, den Stapel von Folien auf der Palette auf den Kopf zu stellen, die Palette aus dem Stapel von Folien freizugeben, wodurch ein freies Ende (250) erzeugt wird, wobei die relative Position des freien Endes (250) zwischen der Folienentfernungseinheit (110) und der Stapelvorbereitungseinheit (500) zum Eingriff der Seitenstützplatte (150) einstellbar ist und zum Einführen von oder Angriff eines oder mehrerer Angriffsmesser (170) einstellbar ist.

8. Verfahren (700) zum Vorbereiten eines Stapels von Folien (210) zum Verarbeiten, wobei das Verfahren die folgenden Handlungen umfasst:
- Bereitstellen (710) eines Stapels von Folien (210), die verarbeitet werden sollen und ein freies Ende (250) und eine Seite (230) von Folienkanten (260) aufweisen;
- Einführen (730) eines ersten Angriffsmessers (171) in einer ersten Angriffsbewegung (411) in die Angriffsrichtung (440) und zwischen ein Paar von Folien;
- Heben (740) des ersten Angriffsmessers (171);
- tieferes Einführen (730) eines oder mehrerer zweiter Angriffsmesser (172) in einer zweiten Angriffsbewegung (412);
wahlweise Durchführen einer oder mehrerer der folgenden Handlungen:
- Hindurchleiten (750) eines oder mehrerer der Angriffsmesser von Interesse in einer Querbewegung (400) quer zu der Angriffslinienrichtung (440) und parallel zu den Folienkanten (260) ;
- Ergreifen (760) einer Anzahl von Folien von dem freien Ende (250) des Stapels von Folien (210);
- Entfernen (770) der Anzahl von Folien von dem freien Ende (250); **dadurch gekennzeichnet, dass** das Verfahren vor der Handlung des Einführens (730) des ersten Angriffsmessers (171) ferner die folgenden Handlungen umfasst:
- Bereitstellen eines Stapelentfernersystems (100), das eine Markierungseinheit (510) umfasst, die dazu angeordnet ist, die Folie an einem nicht bedeckten freien Ende (250) des Stapels von Folien (210) zu markieren;
- Markieren der Folie an einem nicht bedeckten freien Ende (250) des Stapels von Folien (210) mit der Markierungseinheit (510); und
- Eingreifen (720) in eine Seitenstützfläche (160) an einer Folienentfernungseinheit (110) in einer Angriffsrichtung (440) zu der Seite (230) der Folienkanten an dem freien Ende (250).

9. Verfahren (700) zum Vorbereiten eines Stapels von Folien (210) zum Verarbeiten nach Anspruch 8, wobei die Handlung des Bereitstellens eines Stapels von Folien in einer Stapelvorbereitungseinheit (500) durchgeführt wird, die dazu konfiguriert ist, einen Stapel von Folien auf einer Palette (270) aufzunehmen und zu drehen, und das ferner die folgenden Handlungen umfasst:
- Auf-den-Kopf-Drehen (780) des Stapels von Folien auf der Palette;
- Freigeben (790) der Palette aus dem Stapel von Folien, was ein freies Ende (250) erzeugt;
- wiederholtes Einstellen (800) der Position des erzeugten freien Endes (250) für die Handlungen des Eingreifens und Einführens;
- Anwenden (810) der freigegebenen Palette oder einer anderen Palette auf das erzeugte freie Ende (250); und
- Drehen (780) des Stapels von Folien mit der angewendeten Palette.

## Revendications

1. Système de dispositif de retrait de feuilles d'une pile (100) pour préparer une pile de feuilles (210) avec une hauteur (240), une extrémité libre (250) et un côté (230) de bords de feuilles (260) pour un traitement dans une unité de préparation de pile (PPU), le système comprenant :
- une unité de retrait de feuilles (110) ayant un cadre de support (120) supportant un cadre mobile (130) conçu pour un mouvement linéaire dans une direction d'attaque (440) vers le côté (230) et l'extrémité libre (250) de la pile de feuilles (210), le cadre mobile (130) ayant une plaque de support de côté (150) avec une face de support de côté (160) agencée pour faire face au côté (230) de la pile de feuilles (210) et s'appliquer sur celui-ci,
- une plaque de saisie (300) agencée avec une face de saisie (310) essentiellement perpendiculaire à la face de support de côté (160) et s'étendant au-delà de la face de support de côté (160) dans la direction d'attaque (440) et conçue avec un actionneur de saisie (320) pour un mouvement de saisie (420) vers l'extrémité libre (250) de la pile de feuilles (210),
- un ou plusieurs couteaux d'attaque (170) agencés pour faire face au côté (230) de la pile de feuilles (210) et conçus avec un ou plusieurs actionneurs d'attaque (184) pour au moins un mouvement d'attaque (410) dans la direction d'attaque (440) pour une insertion des un ou plusieurs couteaux d'attaque (170) entre une paire de feuilles (220),
dans lequel il existe un premier couteau d'attaque (171) pour un premier mouvement d'attaque (411) et un second couteau d'attaque (172) pour un second mouvement d'attaque (412) ;
dans lequel le premier couteau d'attaque (171) est un couteau plus petit avec une lame dans la direction d'attaque (440) et le second couteau d'attaque (172) est un couteau plus grand, **caractérisé en ce que** le système de dispositif de retrait de feuilles d'une pile (100) comprend en outre :
- une unité de marquage (510) agencée pour marquer la feuille sur une extrémité libre non recouverte (250) de la pile de feuilles (210).

2. Système de dispositif de retrait de feuilles d'une pile (100) selon la revendication 1, dans lequel un ou plusieurs premiers couteaux d'attaque (170, 171) sont conçus avec un ou plusieurs actionneurs de soulèvement de bord (190) pour un mouvement de soulèvement (430) transversal à la ligne de direction d'attaque (440) et perpendiculaire à la direction de bords de feuilles (260).

3. Système de dispositif de retrait de feuilles d'une pile (100) selon une quelconque revendication précédente, dans lequel un ou plusieurs seconds couteaux d'attaque (170, 172) sont conçus avec un ou plusieurs actionneurs transversaux (180) pour un mouvement transversal (400) qui est transversal à la ligne de la direction d'attaque (440) et parallèle aux bords de feuilles (260).

4. Système de dispositif de retrait de feuilles d'une pile (100) selon une quelconque revendication précédente, dans lequel un ou plusieurs couteaux d'attaque (170, 172) sont conçus pour un second mouvement d'attaque (412) prolongeant le premier mouvement d'attaque (410) dans la direction d'attaque (440) pour une insertion approfondie des un ou plusieurs couteaux d'attaque (170) entre la paire de feuilles (220).

5. Système de dispositif de retrait de feuilles d'une pile (100) selon une quelconque revendication précédente, dans lequel un ou plusieurs couteaux d'attaque (170) sont conçus avec un bord de type ciseau monoface vers le haut et éventuellement un bord sensiblement linéaire s'étendant à l'opposé de la direction d'attaque (440).

6. Système de dispositif de retrait de feuilles d'une pile (100) selon une quelconque revendication précédente, qui est agencé dans un module de changement de palette (600) comprenant un portique à palette (620) avec des moyens d'engagement de palette mobiles (630) permettant de s'engager avec une palette (270) pour une extraction depuis une palette (270) et/ou une insertion de celle-ci.

7. Système de dispositif de retrait de feuilles d'une pile (100) selon une quelconque revendication précédente, dans lequel l'unité de retrait de feuilles (110) est agencée en coopération avec une unité de préparation de pile (500) qui est conçue pour recevoir une pile de feuilles (210) sur une palette (270), retourner la pile de feuilles sur la palette, libérer la palette de la pile de feuilles en créant une extrémité libre (250), la position relative de l'extrémité libre (250) entre l'unité de retrait de feuilles (110) et l'unité de préparation de pile (500) étant réglable pour un engagement d'une plaque de support de côté (150) et réglable pour l'insertion ou l'attaque d'un ou de plusieurs couteaux d'attaque (170).

8. Procédé (700) de préparation d'une pile de feuilles (210) pour un traitement, le procédé comprenant les actions consistant à :
- fournir (710) une pile de feuilles (210) à traiter et ayant une extrémité libre (250) et un côté (230) de bords de feuilles (260) ;
- insérer (730) un premier couteau d'attaque (171) dans un premier mouvement d'attaque (411) dans la direction d'attaque (440) et entre une paire de feuilles ;
- soulever (740) le premier couteau d'attaque (171) ;
- insérer (730) plus profondément un ou plusieurs seconds couteaux d'attaque (172) dans un second mouvement d'attaque (412) ;
réalisant éventuellement une ou plusieurs des actions suivantes :
- faire traverser (750) un ou plusieurs des couteaux d'attaque d'intérêt dans un mouvement transversal (400) transversalement à la ligne de direction d'attaque (440) et parallèlement aux bords de feuilles (260) ;
- saisir (760) un nombre de feuilles à partir de l'extrémité libre (250) de la pile de feuilles (210) ;
- retirer (770) le nombre de feuilles à partir de l'extrémité libre (250) ; **caractérisé en ce que** le procédé, avant l'action consistant à insérer (730) le premier couteau d'attaque (171), comprend en outre les actions consistant à :
- fournir un système de dispositif de retrait de pile (100) comprenant une unité de marquage (510) agencée pour marquer la feuille sur une extrémité libre non recouverte (250) de la pile de feuilles (210) ;
- marquer la feuille sur une extrémité libre non recouverte (250) de la pile de feuilles (210) avec ladite unité de marquage (510) ; et
- engager (720) une face de support de côté (160) sur une unité de retrait de feuilles (110) dans une direction d'attaque (440) vers le côté (230) des bords de feuilles au niveau de l'extrémité libre (250).

9. Procédé (700) de préparation d'une pile de feuilles (210) pour un traitement selon la revendication 8, dans lequel l'action consistant à fournir une pile de feuilles est réalisée dans une unité de préparation de pile (500) qui est conçue pour recevoir et faire tourner une pile de feuilles sur une palette (270), et comprenant en outre les actions consistant à :
- faire tourner (780) la pile de feuilles pour la retourner sur la palette ;
- libérer (790) la palette de la pile de feuilles en créant une extrémité libre (250) ;
- régler (800) la position de manière répétée de l'extrémité libre (250) créée pour les actions d'engagement et d'insertion ;
- appliquer (810) la palette libérée ou une autre palette sur l'extrémité libre (250) créée ; et
- faire tourner (780) la pile de feuilles avec la palette appliquée.
